(19) Europäisches Patentamt / European Patent Office / Office européen des brevets

(11) **EP 3 098 448 B1**

(12) # EUROPÄISCHE PATENTSCHRIFT

(45) Veröffentlichungstag und Bekanntmachung des Hinweises auf die Patenterteilung:
**21.12.2022 Patentblatt 2022/51**

(21) Anmeldenummer: **16000917.1**

(22) Anmeldetag: **22.04.2016**

(51) Internationale Patentklassifikation (IPC):
*G05D 16/20* (2006.01)  *H02P 23/00* (2016.01)
*F04B 35/04* (2006.01)  *F04B 49/06* (2006.01)
*H02P 23/04* (2006.01)

(52) Gemeinsame Patentklassifikation (CPC):
**F04B 49/06; F04B 35/04; G05D 16/2066;**
**H02P 23/0004; H02P 23/04;** F04B 2201/1201;
F04B 2201/1202; F04B 2201/12041;
F04B 2203/0207; F04B 2203/0209; F05B 2210/12;
F05B 2270/335; F05B 2270/70

(54) **VERFAHREN UND REGELKREIS ZUR REGELUNG EINES ELEKTRISCHEN ANTRIEBS EINES ELEKTRISCH ANGETRIEBENEN DRUCKLUFTVERDICHTERS EINES KRAFTFAHRZEUGS**

METHOD AND CONTROL LOOP FOR CONTROLLING AN ELECTRIC DRIVE OF AN ELECTRICALLY DRIVEN PNEUMATIC COMPRESSOR OF A MOTOR VEHICLE

PROCÉDÉ ET CIRCUIT DE RÉGULATION D'UN ENTRAÎNEMENT ÉLECTRIQUE D'UN COMPRESSEUR PNEUMATIQUE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2015 DE 102015006988**

(43) Veröffentlichungstag der Anmeldung:
**30.11.2016 Patentblatt 2016/48**

(73) Patentinhaber: **MAN Truck & Bus SE**
**80995 München (DE)**

(72) Erfinder: **Hase, Andreas**
**80993 München (DE)**

(74) Vertreter: **v. Bezold & Partner Patentanwälte - PartG mbB**
**Ridlerstraße 57**
**80339 München (DE)**

(56) Entgegenhaltungen:
EP-A2- 2 023 480     DE-A1-102008 006 860
JP-A- 2006 180 605     US-A1- 2006 125 437
US-A1- 2011 234 144

## Beschreibung

Die Erfindung betrifft ein Verfahren zur Regelung eines elektrischen Antriebs eines elektrisch angetriebenen Druckluftverdichters eines Kraftfahrzeugs. Die Erfindung betrifft ferner einen entsprechenden Regelkreis.

Aus der Praxis ist bekannt, Druckluftverdichter, sogenannte Luftpresser (LP), zur Versorgung pneumatischer Bremsanlagen in Nutzfahrzeugen vorzusehen, die beispielsweise nach dem Hubkolbenprinzip arbeiten. Für hybridelektrische Nutzfahrzeuge, d. h. Nutzfahrzeuge, die mit einem hybridisierten Antriebsstrang ausgestattet sind, ist es je nach Einsatzzweck erforderlich, Luftpresser vorzusehen, die zumindest teilweise elektrisch angetrieben sind, auch abgekürzt als sogenannte "e-LP" bezeichnet. Der elektrische Antrieb eines elektrisch angetriebenen Druckluftverdichters kann einen Frequenzumrichter und einen Elektromotor umfassen, wobei der Elektromotor beispielsweise als Asynchronmaschine, Synchronmaschine oder Reluktanzmaschine ausgeführt sein kann.

Insbesondere auf der Hubkolbentechnik basierende Luftpresser weisen jedoch Lastdrehmomente mit hohen Spitzen und nichtlinearen Schwankungen auf, die der elektrische Antrieb ausgleichen muss. Selbst bei konstanten Druckverhältnissen am LP-Ausgangsstutzen ändert sich das Drehmoment stark nichtlinear über eine volle Kurbelwellenumdrehung. Dies führt zu hohen Leistungsverlusten, vor allem im Dauerbetrieb. Weitere Nachteile stellen die erforderliche hohe elektrische Leistungsreserve dar, insbesondere für den Motoranlauf des Luftpressers, sowie die hohen Kühlungsanforderungen, z. B. bei einem langsamen Motoranlauf bei hohem Drehmoment einer luftgekühlten Asynchronmaschine. Dies führt zu höherem Aufwand und Kosten in der Leistungselektronik und beim Motor, z. B. betreffend die Thermik und Stromtragfähigkeit.

Die US 2006/0125437A1 offenbart eine Kontrollvorrichtung zur Regelung eines elektrischen Antriebs eines Kompressors wobei ein Lastdrehmoment des Kompressors als Funktion von mindestens einem Betriebsparameter geschätzt wird und zur Vermeidung von Regelfehlern bei der Regelung berücksichtigt wird. Die DE 10 2008 006 860 A1 offenbart einen Kompressor einer Druckluftanlage, dem ein in Stufen oder stufenlos verstellbares Getriebe vorgeordnet ist, über welches nach Maßgabe einer Steuereinheit ein Förderstrom der von dem Kompressor geförderten Druckluft veränderbar ist. Die US 2011/0234144 A1 offenbart ein weiteres Motorsteuergerät, bei dem auf Basis eines der erfassten Stroms ein Lastmoment bestimmt wird, das zur Kompensation bei der Regelung berücksichtigt wird.

Es ist somit eine Aufgabe der Erfindung, einen verbesserten elektrischen Antrieb bzw. ein verbessertes Betriebsverfahren für einen elektrischen Antrieb eines elektrisch angetriebenen Druckluftverdichters bereitzustellen, mit dem Nachteile herkömmlicher Techniken vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Regelung eines elektrischen Antriebs eines elektrisch angetriebenen Druckluftverdichters eines Kraftfahrzeugs bereitgestellt. Das Kraftfahrzeug ist vorzugsweise als Nutzfahrzeug ausgeführt, und der Druckluftverdichter ist vorzugsweise zur Versorgung einer pneumatischen Druckluftanlage, insbesondere einer pneumatischen Druckluftbremsanlage vorgesehen.

Erfindungsgemäß wird ein momentanes an einer vom elektrischen Antrieb angetriebenen Antriebswelle des Druckluftverdichters anliegendes Lastdrehmoment des Druckluftverdichters als Funktion von mindestens einem Betriebsparameter geschätzt und als Störgrößenschätzung auf den Regelkreis des elektrischen Antriebs geschaltet, um einen durch das anliegende Lastdrehmoment erzeugten Regelfehler zu reduzieren. Es wird somit das geschätzte, momentan an der Antriebswelle des Druckluftverdichters anliegende Lastdrehmoment als Funktion von mindestens einem Betriebsparameter derart als Störgrößenschätzung auf den Regelkreis des elektrischen Antriebs geschaltet, dass der durch die Lastdrehmoment-Charakteristik erzeugte Regelfehler im Regelkreis reduziert, vorzugsweise minimiert und dadurch die Dynamik der elektrischen Antriebs erhöht wird.

Die Störgrößenaufschaltung des Antriebswellenlastmoments für die Maschinenregelung ermöglicht eine Reduzierung der Regelfehler, insbesondere für die Drehzahl und den elektrischen Strom in der Motorregelung, und eine Minimierung von Spitzen und Schwankungen im Motorphasenstrom bzw. Motordrehmoment. Weitere Vorzüge liegen in der Reduzierung der elektrischen Leistungsverluste und -reserve im Frequenzumrichter sowie in der Reduzierung der mechanischen Belastung für den Druckluftverdichter und Motor.

Erfindungsgemäß wird das momentane an der Antriebswelle des Druckluftverdichters anliegende Lastdrehmoment des Druckluftverdichters als Funktion von zumindest einer der folgenden Größen geschätzt: einer momentanen Winkelposition der Antriebswelle des Druckluftverdichters; einer momentanen Drehzahl der Antriebswelle des Druckluftverdichters, die durch eine Motordrehzahl des elektrischen Antriebs vorgegeben ist; und einem momentanen Wert eines Druckparameters, aus dem ein aktueller Wert eines am Ausgangsstutzen des Druckluftverdichters anliegenden Luftdrucks ableitbar oder abschätzbar ist und/oder der ein Maß für einen von einer mit dem Druckluftverdichter gekoppelten Druckluftanlage erzeugten Gegendrucks angibt.

Diese drei Betriebsparameter haben ursächlich den größten Anteil an den Schwankungen des vom Druckluftverdichter erzeugten Lastdrehmoments an der vom elektrischen Antrieb angetriebenen Antriebswelle des Druckluftverdichters und sind somit zur Schätzung des Lastdrehmoments besonders vorteilhaft.

Gemäß einer besonders bevorzugten Ausgestaltungsform wird das momentane an der Antriebswelle des Druckluftverdichters anliegende Lastdrehmoment des Druckluftverdichters unter Verwendung zumindest dieser drei Betriebsparameter geschätzt, d. h. als Funktion der momentanen Winkelposition der Antriebswelle, der momentanen Drehzahl der Antriebswelle und des momentanen Werts des Druckparameters geschätzt. Dies ermöglicht eine besonders genaue Schätzung der Störgröße und somit eine besonders starke Reduzierung des Regelfehlers.

Die Funktion zur Schätzung des momentanen an der Antriebswelle des Druckluftverdichters anliegenden Lastdrehmoments des Druckluftverdichters kann als Kennfeld, beispielsweise als Matrixkennfeld, hinterlegt sein, wobei das Kennfeld vorab durch Vermessung des Lastmoments in Abhängigkeit von den Betriebsparametern bestimmt wird.

Eine Möglichkeit der erfindungsgemäßen Realisierung sieht vor, dass der Regelkreis für eine elektrische Stromregelung (Stromregelkreis) des elektrischen Antriebs mit der Störgrößenschätzung beaufschlagt wird. Insbesondere kann die Störgrößenschätzung mit der Übertragungsfunktion des Stromregelkreises invertiert werden und zu einer Stellgröße eines Drehzahlreglers des elektrischen Antriebs addiert werden und dadurch auf den Regelkreis für die elektrische Stromregelung des elektrischen Antriebs aufgeschaltet werden.

Die resultierende Schätzgröße (Störgrößenschätzung) wird über die inverse Übertragungsfunktion des Stromregelkreises zu einer Stellgröße des Drehzahlreglers des elektrischen Antriebs addiert und dadurch auf den Regelkreis für die elektrische Stromregelung des elektrischen Antriebs aufgeschaltet.

Ein besonderer Vorteil dieser Realisierung liegt darin, dass der Luftdruckverdichter eigenständig vermessen und das daraus abgeleitete Kennfeld für die Schätzgröße mit jedem beliebigen Elektromotor und Frequenzumrichter verwenden werden kann. Somit werden keine weiteren Anforderungen an die Sensorik von Elektromotor und Frequenzumrichter mit drehzahlregelten Betrieb gestellt. Weiterhin kann das bekannte, nichtlineare Druckluftverdichter-Verhalten größtenteils relativ einfach abgebildet und ausgeregelt werden. Eine detaillierte, aufwendige Modellierung der mechanischen Regelstrecke vom internen Aufbau des Druckluftverdichters ist nicht notwendig - was wesentlich höheren Aufwand an die Rechenleistung und Echtzeitfähigkeit der Hardware und Software für die Regelung stellt - wodurch die Implementierung geringere Mehrkosten für den Regler nach sich zieht bei verbesserter Funktionalität.

Um die Genauigkeit der Schätzung des Lastdrehmoments weiter zu erhöhen, kann das momentane an der Antriebswelle des Verdichters anliegende Lastdrehmoment des Verdichters gemäß einer weiteren Ausführungsvariante ferner als Funktion von zumindest einer der folgenden Größen geschätzt werden: einem Reibmoment des Hubkolbens, wobei der Druckluftverdichter als Hubkolbendruckluftverdichter ausgeführt ist; einer Umgebungstemperatur der Luft und einer Kühlmitteltemperatur eines Kühlmittels eines Kühlkreislaufs des Druckluftverdichters.

Der Druckluftverdichter kann als Hubkolbendruckluftverdichter ausgeführt sein, beispielsweise mit einem oder zwei Zylindern. Bei nach dem Hubkolben-Prinzip arbeitenden Druckluftverdichtern sind die Schwankungen im Lastmoment besonders groß. Das erfindungsgemäße Verfahren ist jedoch auch für andere Kompressortechnologien anwendbar. So kann der Druckluftverdichter auch als Schrauben-Druckluftverdichter (sog. Scroll-Prinzip) oder als Flügelzellen-Druckluftverdichter ausgeführt sein.

Gemäß einer weiteren bevorzugten Ausführungsform wird ein Frequenzumrichter zur Regelung des elektrischen Antriebs mit einer feldorientierten Vektorregelung betrieben, welche mit und ohne Drehzahlgeber ausgeführt werden kann. Für die Störgrößenaufschaltung und zur Implementierung des erfindungsgemäßen Regelverfahrens bzw. Regelkreises ist eine Strommessung erforderlich. Zur weiteren Umsetzung einer geberlosen, feldorientierten Vektorregelung ist eine entsprechende Anforderung an die Genauigkeit der Strommessung erforderlich, es können jedoch Kosten für die Geber bzw. separaten Sensoren zur Bestimmung der Winkelposition und Drehzahl der Antriebswelle eingespart werden.

Die Erfindung ist hinsichtlich des konstruktiven Aufbaus der elektrischen Maschine des elektrischen Antriebs nicht auf einen bestimmten Aufbau beschränkt. Die elektrische Maschine kann als Asynchronmaschine, Synchronmaschine, Reluktanzmaschine oder Gleichstrommaschine ausgeführt sein.

Gemäß einem zweiten Gesichtspunkt der Erfindung wird ein Regelkreis zur Regelung eines elektrischen Antriebs eines elektrisch angetriebenen Druckluftverdichters eines Kraftfahrzeugs bereitgestellt. Erfindungsgemäß ist der Regelkreis ausgebildet, das Verfahren zur Regelung des elektrischen Antriebs, wie in diesem Dokument beschrieben, durchzuführen. Insbesondere ist der Regelkreis ausgeführt, ein momentanes an einer Antriebswelle des Verdichters anliegendes Lastdrehmoment des Verdichters als Funktion von wenigstens einem Betriebsparameter zu schätzen und als Störgrößenschätzung auf den Regelkreis des elektrischen Antriebs derart aufzuschalten, dass ein durch das anliegende Lastdrehmoment erzeugter Regelfehler reduziert wird. Zur Vermeidung von Wiederholungen sollen rein verfahrensgemäß offenbarte Merkmale auch als vorrichtungsgemäß offenbart gelten und beanspruchbar sein und somit auch für den Regelkreis gelten.

Die Erfindung betrifft ferner ein Kraftfahrzeug, insbesondere ein Nutzfahrzeug, mit einem elektrisch angetriebenen Druckluftverdichter zur Versorgung einer pneumatischen Druckluft-/Bremsanlage und einem solchen Regelkreis.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    ein Ersatzschaltbild bzw. Modell im Laplace-Bereich eines Regelkreises ohne die Störgrößenschaltung;

Figur 2    ein Ersatzschaltbild bzw. Modell im Laplace-Bereich eines Regelkreises mit Störgrößenschaltung gemäß einer Ausführungsform der Erfindung; und

Figur 3    die Kennlinien-Funktion eines Lastmoments eines Hubkolbendruckluftverdichters gemäß einer Ausführungsform der Erfindung.

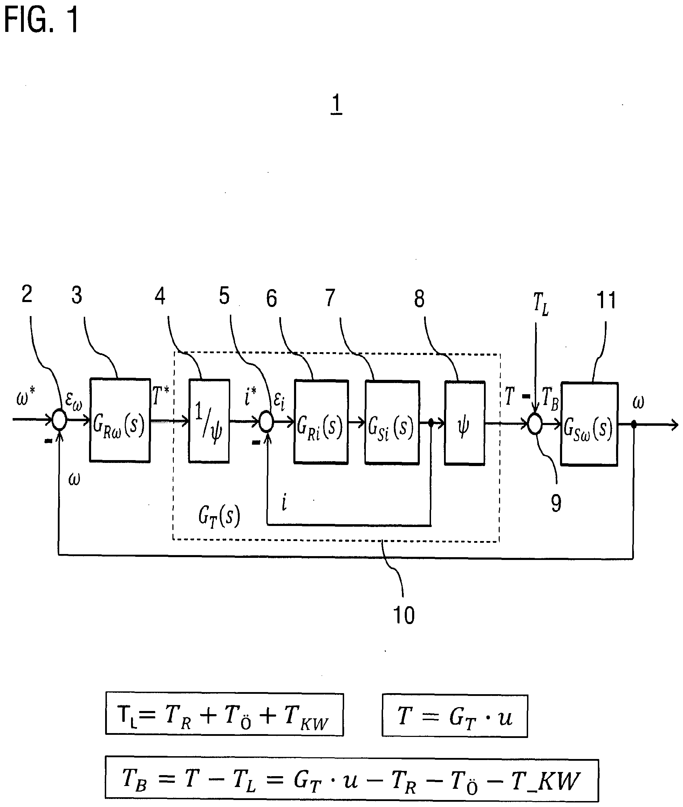

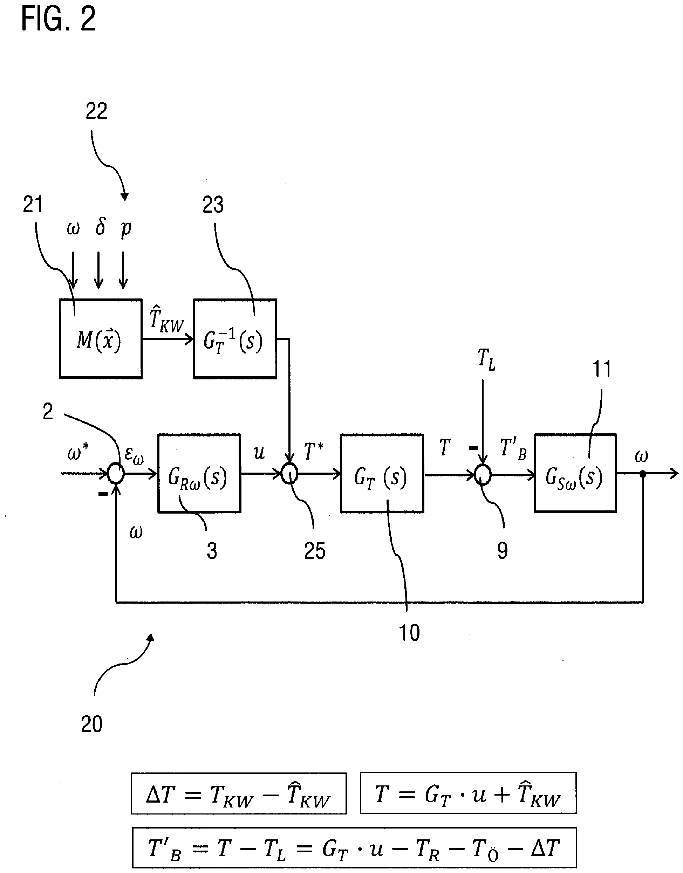

In dem beschriebenen Ausführungsbeispiel ist der elektrisch angetriebene Druckluftverdichter beispielhaft als Zweizylinder Hubkolbendruckluftverdichter ausgeführt. Der elektrische Antrieb umfasst eine elektrische Maschine, welche die Kurbelwelle (Antriebswelle) des Druckluftverdichters antreibt. Der Druckluftverdichter und die Kurbelwelle, die in an sich bekannter Weise ausgeführt sein können, sind nicht dargestellt. Das Prinzip des Regelverfahrens und des Regelkreises wird anhand der Regelung einer als Gleichstrom-Maschine ausgeführten elektrischen Maschine erklärt. Hierzu zeigt Figur 1 ein Ersatzschaltbild und Modell im Laplace-Bereich des Regelkreises bzw. der Regelstrecke zur Illustration der Regelung von Ankerstrom und Motordrehzahl. In Figur 1 ist der Regelkreis zunächst ohne die erfindungsgemäße Störgrößenaufschaltung dargestellt, welche anschließend anhand von Figur 2 erläutert wird.

Figur 1 zeigt eine an sich bekannte Kaskadenschaltung zur Ausbildung eines drehzahlgeregelten und stromgeregelten Regelkreises bzw. Reglers (Kaskadenregelung). Dieses an sich bekannte Regelprinzip wird vorliegend zur Regelung des elektrischen Antriebs des Druckluftverdichters verwendet. Der Regler kann beispielsweise als PID-, PD- oder PI-Regler ausgeführt sein.

Sollgrößen sind in Figur 1 und in Figur 2 mit einem Stern "*" gekennzeichnet.

Die Kaskadenschaltung weist einen äußeren Regelkreis auf, umfassend den Drehzahlregler 3 und die Regelstrecke 11 für das modellierte Massenträgheitsmoment des Druckluftverdichters, die in Figur 1 als die Übertragungsfunktionen $G\_R\omega(S)$ und $G\_S\omega(S)$ dargestellt sind. Hierbei wird der Drehzahlregler 3 mit dem Drehzahlregelfehler $\varepsilon\_\omega$ beaufschlagt, d. h. der im Differenzierer 2 gebildeten Differenz aus momentaner Solldrehzahl $\omega^*$ und tatsächlich bestimmter momentaner Drehzahl $\omega$ der Antriebswelle. Der Drehzahlregler 3 bestimmt hieraus eine Stellgröße in Form eine Solldrehmoments $T^*$, mit dem der innere Regelkreis 10 der Kaskadenschaltung beaufschlagt wird.

Der innere Regelkreis 10 (in Figur 1 und Figur 2 auch als $G\_T(S)$ bezeichnet) dient der elektrischen Stromregelung des elektrischen Antriebs. Ziel dieser Regelung ist es bekanntermaßen, einen vorgegebenen Strom in der Maschine einzustellen und Störungen der Betriebsspannung auszuregeln. Eine unterlagerte Stromregelung zur Verbesserung der Drehzahlregelung wird im Wesentlichen verwendet, um den Einfluss der entgegengerichteten elektromotorischen Kraft (EMK) zu vermindern. Mit dem Bezugszeichen 8 ist in Figur 1 die Übertragungsfunktion $\psi$ der Konstante für die elektromotorische Kraft (EMK) bezeichnet, mit dem Bezugszeichen 4 entsprechend die Übertragungsfunktion $1/\psi$. Die Übertragungsfunktion $1/\psi$ berechnet aus dem Solldrehmoment $T^*$ den Sollstrom $i^*$.

Der Differenzierer 5 berechnet den Stromregelfehler $\varepsilon\_i$ durch Bilden der Differenz aus Sollstrom $i^*$ und tatsächlich bestimmtem Strom i der Gleichstrommaschine. Der Stromregler 6, hier dargestellt als die Übertragungsfunktion $G\_Ri(S)$, wird mit dem Stromregelfehler $\varepsilon\_i$ beaufschlagt und berechnet eine entsprechende Stellgröße für die Regelstrecke 7 für den Stromkreis der elektrischen Maschine, (in Figur 1 dargestellt als die Laplace-Übertragungsfunktion $G\_Si(S)$).

Die Größe $T\_L$ beschreibt das Lastmoment an der elektrischen Maschine bzw. das Kurbelwellendrehmoment des Druckluftverdichters, das ein Störverhalten für den Regelkreis darstellt. Je größer die Schwankung in der Störgröße $T\_L$, desto größer ist der Regelfehler des Regelkreises und desto stärker schwankt die Größe $T\_B$ und damit das Drehmoment, das die Regelstrecke $G\_S\omega(S)$ ausgleichen muss.

Das Lastmoment an der E-Maschine $T\_L$ bzw. das Kurbelwellendrehmoment des Druckluftverdichters besteht aus mehreren Anteilen:
Einem ersten Anteil, der das Drehmoment $T\_KW = f(\delta\_KW, \omega, p)$ als Funktion abhängig von der Kurbelwellenwinkelposition $\delta$, der Drehzahl $\omega$ und dem Druck $p$ in der Druckluftanlage angibt.

Einem zweiten Drehmomentanteil $T\_\ddot{O}$, der aus dem Betrieb einer Ölpumpe des Druckluftverdichters resultiert, und einem unbekanntem Restanteil $T\_Rest$.

$$(\text{Formel 1}): \quad T\_L = T\_KW + T\_\ddot{O} + T\_Rest$$

Hierbei stellt der erste Anteil $T\_KW$ die weitaus größte Komponente dar.

Das in Figur 1 gezeigte Regelmodell wird daher weitergebildet, indem das momentane an einer Antriebswelle des Druckluftverdichters anliegende Lastdrehmoment $T\_L$ des Druckluftverdichters als Funktion von mindestens einem Betriebsparameter geschätzt wird und als Störgrößenschätzung derart auf den Regelkreis des elektrischen Antriebs geschaltet wird, dass der durch das anliegende Lastdrehmoment erzeugte Regelfehler reduziert wird. Vorliegend wird für die Störgrößenaufschaltung nur der erste Anteil T_KW geschätzt. Die Schätzgröße für T_KW wird nachfolgend mit T^_KW bezeichnet. Eine Schätzung T^_KW des Drehmoments T_KW erfolgt über ein Matrixkennfeld 21 auf Basis von Kennlinien aus vorab experimentell durchgeführten Messungen am Druckluftverdichter.

Im vorliegenden Ausführungsbeispiel wurde der Verlauf in Abhängigkeit von der momentanen Winkelposition $\delta$ der Antriebswelle des Druckluftverdichters, der momentanen Drehzahl $\omega$ der Antriebswelle des Druckluftverdichters, die durch eine Motordrehzahl des elektrischen Antriebs vorgegeben ist, und dem momentanen Wert eines Druckparameters p, aus dem ein aktueller Wert eines am Ausgangsstutzen des Druckluftverdichters anliegenden Luftdrucks ableitbar oder abschätzbar ist und/oder der ein Maß für einen von einer mit dem Druckluftverdichter gekoppelten Druckluftanlage erzeugten Gegendrucks angibt, gemessen.

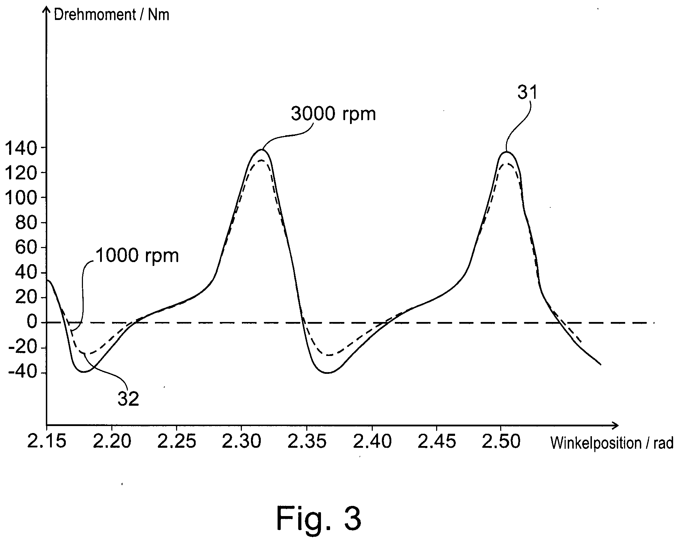

Figur 3 zeigt beispielhaft den Verlauf des an der vom elektrischen Antrieb angetriebenen Kurbelwelle eines Zweizylinder-Hubkolbendruckluftverdichters anliegenden Lastmoments T_KW als Funktion der Winkelposition $\delta$ der Kurbelwelle.

Die Kurve 31 mit der durchgezogenen Linie gibt dabei den winkelpositionsabhängigen Verlauf des Lastdrehmoments für eine Drehzahl $\omega$ von 3000 Umdrehungen pro Minute an, während die Kurve 32 mit der strichgepunkteten Linie den winkelpositionsabhängigen Verlauf des Lastdrehmoments für eine Drehzahl $\omega$ von 1000 Umdrehungen pro Minute angibt. Wie in Figur 3 erkennbar, ist das Drehmoment stark abhängig vom Druckaufbau im Hubkolben bzw. Winkel der Kurbelwelle (KW). Selbst bei konstanten Druckverhältnissen am Ausgangsstutzen des Druckluftverdichters ändert sich das Drehmoment stark nichtlinear über eine volle Kurbelwellenumdrehung und schwankt teilweise bis zu 180 Nm im vorliegenden Beispiel. Die Dynamik hängt direkt von der Antriebsdrehzahl ab, was durch die unterschiedlichen Verläufe 31 und 32 beispielhaft dargestellt ist. Zur Vereinfachung der Darstellung ist die Abhängigkeit des Lastdrehmoments vom Druckparameter p in Figur 3 nicht dargestellt. Ferner ist die Drehzahlabhängigkeit des Lastmoments in Figur 3 ebenfalls nur beispielhaft anhand zweier Werte des Drehzahlparameters $\omega$ angedeutet, wobei jedoch die Kennlinie für den gesamten Drehzahlbereich des elektrischen Motors gemessen und hinterlegt wird.

Ohne Kompensation führt das Ausregeln dieser Schwankungen im Motor und Umrichter des elektrischen Antriebs zu hohen Leistungsverlusten, vor allem im Dauerbetrieb. Ferner muss eine hohe Leistungsreserve vorgehalten werden, insbesondere für den Motoranlauf des Druckluftverdichters. Schließlich steigen die Kühlungsanforderungen, z. B. schneller Motoranlauf einer luftgekühlten ASM. Dies führt zu höherem Aufwand und höheren Kosten in der Leistungselektronik und Motor (Thermik, Stromtragfähigkeit).

Bei konstantem Luftdruck am Ausgangsstutzen des Luftpressers wiederholt sich der Verlauf des Lastmoments T_L eines Hubkolbendruckluftverdichters jedoch periodisch nach jeder Vollumdrehung von 360° und kann somit unter Verwendung der Kennlinie(n) 31, 32 vorhergesagt werden. Der Druck am Ausgangsstutzen bzw. in den Drucklufttanks besitzt eine wesentlich langsamere Zeitkonstante und ändert sich nur geringfügig über mehrere hundert Umdrehungen. Im Nutzfahrzeugbetrieb kann beispielsweise die vorhandene Druckmessung der Drucklufttanks für die Bestimmung des Druckluftparameters p herangezogen werden.

Figur 2 zeigt die Weiterbildung des Regelmodells aus Figur 1. Hierbei entsprechen Komponenten mit gleichen Bezugszeichen den Komponenten der Figur 1 und werden nicht gesondert beschrieben. Die Besonderheit des erfindungsgemäßen Regelverfahrens und der Unterschied zur Figur 1 liegen wie vorstehend erwähnt bereits darin, dass mittels eines Matrixkennfeldes 21 das momentane an der Antriebswelle des Druckluftverdichters anliegende Lastdrehmoment des Druckluftverdichters in Form der Größe T^_KW geschätzt wird.

Hierzu werden fortlaufend die momentanen Werte 22 der Betriebsparameter $\delta$, $\omega$, p bestimmt und anhand der hinterlegten Kennlinienmatrix 21 der momentane Wert für das Lastdrehmoment T_KW geschätzt. Die resultierende Schätzgröße T^_KW wird über die inverse Übertragungsfunktion $G^{-1}\_T(s)$ des Stromregelkreises 10 zu einer Stellgröße u des Drehzahlreglers 3 des elektrischen Antriebs addiert und dadurch auf den Regelkreis 10 für die elektrische Stromregelung des elektrischen Antriebs aufgeschaltet. Die Störgrößenschaltung wird somit genutzt, um die am elektrischen Antrieb anliegende Last zu regeln.

Als Ausgangsgröße des inneren Regelkreises (Stromregelkreises) 10 ergibt sich somit eine Stellgröße die einem Drehmoment T entspricht:

$$\text{(Formel 2)} \quad T = G\_T * u + T^\_KW,$$

*wobei G_T die Übertragungsfunktion des Stromregelkreises 10 ist und u die Stellgröße des Drehzahlreglers 3 ist. Das Symbol "\*" beschreibt eine Multiplikation im Laplace-Bereich (keine Faltung).*

Folglich ergibt sich als Eingangsgröße T_B der Regelstrecke $G\_S\omega(S)$ 11 nun die Größe T'_B:

$$(\text{Formel 3}) \quad T'\_B = T - T\_L = G\_T*u - T\_R - T\_\ddot{O} - \varDelta T,$$

wobei $\varDelta T = T\_KW - T^{\wedge}\_KW$, also dem Schätzfehler des Kurbelwellendrehmoments entspricht.

Ohne die Störgrößenaufschaltung ergibt sich für T_B gemäß der Anordnung aus Figur 1:

$$(\text{Formel 4}) \quad T\_B = T - T\_L = G\_T*u - T\_R - T\_\ddot{O} - T\_KW,$$

Durch den kleineren Durchgriff im Reglerkreis von $\varDelta T$ gegenüber $T\_KW$ können die Reglerfehler $\varepsilon\_\omega$ und $\varepsilon\_i$ reduziert und die Reglergüte erhöht werden.

Die Störgrößenaufschaltung des Antriebswellenlastmoments für die Maschinenregelung ermöglicht somit eine Reduzierung der Regelfehler, insbesondere für die Drehzahl und den elektrischen Strom in der Motorregelung, und eine Minimierung von Spitzen und Schwankungen im Motorphasenstrom bzw. Motordrehmoment. Weitere Vorzüge liegen in der Reduzierung der elektrischen Leistungsverluste und -reserve im Frequenzumrichter sowie in der Reduzierung der mechanischen Belastung für den Druckluftverdichter und Motor.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. So ist es zum Beispiel möglich die bekannte Kurbelwellenstörgröße anderweitig als Drehzahl zu interpretieren und zu schätzen, und diese an anderer Stelle im Regelkreis aufzuschalten. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

**Bezugszeichenliste**

1 Regelkreis ohne Störgrößenaufschaltung
2 Differenzierer
3 Drehzahlregler
4 Übertragungsfunktion 1/y der Konstante für die elektromotorische Kraft
5 Differenzierer
6 Stromregler
7 Regelstrecke E-Maschine für Ankerkreis
8 Übertragungsfunktion $\psi$ der Konstante für die elektromotorische Kraft
9 Differenzierer
10 Regelkreis für eine elektrische Stromregelung des elektrischen Antriebs
11 Regelstrecke für Massenträgheitsmoment des Druckluftverdichters
20 Regelkreis mit Störgrößenaufschaltung
21 Matrixkennfeld des Lastdrehmoments
22 Werte der Betriebsparameter des Matrixkennfeldes
23 Inverse der Übertragungsfunktion des Stromregelkreises
25 Addierer
31 Kennlinienverlauf für 3000 Umdrehungen pro Minute
32 Kennlinienverlauf für 1000 Umdrehungen pro Minute

**Patentansprüche**

1. Verfahren zur Regelung eines elektrischen Antriebs eines elektrisch angetriebenen Druckluftverdichters eines Kraftfahrzeugs, wobei der Druckluftverdichter vorzugsweise zur Versorgung einer pneumatischen Druckluft-/Bremsanlage vorgesehen ist,

wobei ein momentanes an einer Antriebswelle des Druckluftverdichters anliegendes Lastdrehmoment (31) des Druckluftverdichters als Funktion von mindestens einem Betriebsparameter (22) geschätzt wird (21) und als Störgrößenschätzung auf den Regelkreis (20) des elektrischen Antriebs geschaltet wird, um einen durch das anliegende Lastdrehmoment (31) erzeugten Regelfehler zu reduzieren,

**dadurch gekennzeichnet, dass** das momentane an der Antriebswelle des Druckluftverdichters anliegende Lastdrehmoment (31) des Druckluftverdichters als Funktion von zumindest der folgenden Größe geschätzt wird: einem momentanen Wert eines Druckparameters (p), aus dem ein aktueller Wert eines am Ausgangsstutzen des Druckluftverdichters anliegenden Luftdrucks ableitbar oder abschätzbar ist und/oder der ein Maß für einen von einer mit dem Druckluftverdichter gekoppelten Druckluftanlage erzeugten Gegendruck angibt.

2. Verfahren nach Anspruch 1, **dadurch gekennzeichnet, dass** das momentane an der Antriebswelle des Druckluftverdichters anliegende Lastdrehmoment (31) des Druckluftverdichters als Funktion von zumindest einer der folgenden Größen geschätzt wird:

   (a) einer momentanen Winkelposition ($\delta$) der Antriebswelle des Druckluftverdichters, und
   (b) einer momentanen Drehzahl ($\omega$) der Antriebswelle des Druckluftverdichters, die durch eine Motordrehzahl des elektrischen Antriebs vorgegeben ist.

3. Verfahren nach Anspruch 2, **dadurch gekennzeichnet, dass** das momentane an der Antriebswelle des Druckluftverdichters anliegende Lastdrehmoment (31) des Druckluftverdichters zumindest als Funktion der momentanen Winkelposition ($\delta$) der Antriebswelle, der momentanen Drehzahl ($\omega$) der Antriebswelle und des momentanen Werts des Druckparameters (p) geschätzt wird.

4. Verfahren nach einem der vorhergehenden Ansprüche, **dadurch gekennzeichnet, dass** die Funktion als Kennfeld (21) hinterlegt ist.

5. Verfahren nach einem der vorhergehenden Ansprüche, **dadurch gekennzeichnet,**

   (a) **dass** ein Regelkreis (10) für eine elektrische Stromregelung des elektrischen Antriebs mit der Störgrößenschätzung beaufschlagt wird; und/oder
   (b) **dass** die Störgrößenschätzung mit der Übertragungsfunktion eines Regelkreises (10) für eine elektrische Stromregelung des elektrischen Antriebs invertiert wird und zu einer Stellgröße (u) eines Drehzahlreglers (3) des elektrischen Antriebs addiert wird und dadurch auf den Regelkreis (10) für eine elektrische Stromregelung des elektrischen Antriebs aufgeschaltet wird.

6. Verfahren nach einem der vorhergehenden Ansprüche, **dadurch gekennzeichnet, dass** der Druckluftverdichter als Hubkolben-Druckluftverdichter, als Schrauben-Druckluftverdichter oder als Flügelzellen-Druckluftverdichter ausgeführt ist.

7. Verfahren nach einem der vorhergehenden Ansprüche, **dadurch gekennzeichnet, dass** das momentane an der Antriebswelle des Verdichters anliegende Lastdrehmoment (31) des Verdichters als Funktion von zumindest einer der folgenden Größen geschätzt wird:

   (a) einem Reibmoment des Hubkolbens, wobei der Druckluftverdichter als Hubkolben-Druckluftverdichter ausgeführt ist,
   (b) einer Umgebungstemperatur der Luft und
   (c) einer Kühlmitteltemperatur eines Kühlmittels eines Kühlkreislaufs des Druckluftverdichters.

8. Verfahren nach einem der vorhergehenden Ansprüche, **dadurch gekennzeichnet,**

   (a) **dass** ein Frequenzumrichter zur Regelung des elektrischen Antriebs mit einer feldorientierten Vektorregelung betrieben wird; und/oder
   (b) **dass** der elektrische Antrieb eine elektrische Maschine umfasst, die als Asynchronmaschine, Synchronmaschine, Reluktanzmaschine oder Gleichstrommaschine ausgeführt ist.

9. Regelkreis (20) zur Regelung eines elektrischen Antriebs eines elektrisch angetriebenen Druckluftverdichters eines Kraftfahrzeugs, **dadurch gekennzeichnet, dass** der Regelkreis (20) ausgebildet ist, ein Verfahren gemäß einem der Ansprüche 1 bis 8 durchzuführen.

10. Kraftfahrzeug, insbesondere ein Nutzfahrzeug mit einem elektrisch angetriebenen Druckluftverdichter zur Versorgung einer pneumatischen Druckluft-/Bremsanlage in einem Nutzfahrzeug, aufweisend einen Regelkreis (20) nach Anspruch 9.

**Claims**

1. A method for controlling an electric drive of an electrically driven compressed-air compressor of a motor vehicle, wherein the compressed-air compressor is preferably provided for providing a supply to a pneumatic compressed-air brake system, wherein an instantaneous load torque (31) of the compressed-air compressor that is applied at a drive shaft of the compressed-air compressor is estimated (21) as a function of at least one operating parameter (22) and is applied as a disturbance-variable estimate to the control loop (20) of the electric drive in order to reduce a control error generated by the applied load torque (31),
**characterized in that** the instantaneous load torque (31) of the compressed-air compressor that is applied at the drive shaft of the compressed-air compressor is estimated as a function of at least the following variable:
an instantaneous value of a pressure parameter (p) from which a present value of an air pressure prevailing at the outlet connector of the compressed-air compressor can be deduced or estimated and/or which provides a measure for a counter-pressure generated by a compressed-air system coupled to the compressed-air compressor.

2. The method according to Claim 1, **characterized in that** the instantaneous load torque (31) of the compressed-air compressor that is applied at the drive shaft of the compressed-air compressor is estimated as a function of at least one of the following variables:

    (a) an instantaneous angular position ($\delta$) of the drive shaft of the compressed-air compressor, and
    (b) an instantaneous rotational speed ($\omega$) of the drive shaft of the compressed-air compressor, which is predefined by a motor rotational speed of the electric drive.

3. The method according to Claim 2, **characterized in that** the instantaneous load torque (31) of the compressed-air compressor that is applied at the drive shaft of the compressed-air compressor is estimated at least as a function of the instantaneous angular position ($\delta$) of the drive shaft, the instantaneous rotational speed ($\omega$) of the drive shaft and the instantaneous value of the pressure parameter (p).

4. The method according to one of the preceding claims, **characterized in that** the function is stored as a characteristic map (21).

5. The method according to one of the preceding claims, **characterized**

    (a) **in that** a control loop (10) for an electrical current control of the electric drive is acted on by the disturbance-variable estimate; and/or
    (b) **in that** the disturbance-variable estimate is inverted with respect to the transfer function of a control loop (10) for an electrical current control of the electric drive and is added to a manipulated variable (u) of a rotational-speed controller (3) of the electric drive and consequently applied to the control loop (10) for an electrical current control of the electric drive.

6. The method according to one of the preceding claims, **characterized in that** the compressed-air compressor is designed as a reciprocating-piston compressed-air compressor, as a screw compressed-air compressor or as a vane compressed-air compressor.

7. The method according to one of the preceding claims, **characterized in that** the instantaneous load torque (31) of the compressor that is applied at the drive shaft of the compressor is estimated as a function of at least one of the following variables:

    (a) a frictional moment of the reciprocating piston, wherein the compressed-air compressor is designed as a reciprocating-piston compressed-air compressor,
    (b) an ambient temperature of the air, and
    (c) a coolant temperature of a coolant of a cooling circuit of the compressed-air compressor.

8. The method according to one of the preceding claims, **characterized**

    (a) **in that** a frequency converter for controlling the electric drive is operated by way of fieldoriented vector control; and/or
    (b) **in that** the electric drive comprises an electric machine which is designed as an asynchronous machine, a synchronous machine, a reluctance machine or a DC machine.

9. A control loop (20) for controlling an electric drive of an electrically driven compressed-air compressor of a motor vehicle, **characterized in that** the control loop (20) is configured to carry out a method according to one of Claims 1 to 8.

10. A motor vehicle, in particular a utility vehicle having an electrically driven compressed-air compressor for providing a supply to a pneumatic compressed-air brake system in a utility vehicle, having a control loop (20) according to Claim 9.

## Revendications

1. Procédé de régulation d'un entraînement électrique d'un compresseur à air comprimé, entraîné de manière électrique, d'un véhicule automobile, le compresseur à air comprimé étant prévu de préférence pour l'alimentation d'un système pneumatique à air comprimé/de freinage,

   un couple de charge instantané (31), appliqué à un arbre d'entraînement du compresseur à air comprimé, du compresseur à air comprimé étant estimé (21) comme fonction d'au moins un paramètre de fonctionnement (22) et étant appliqué au circuit de régulation (20) de l'entraînement électrique comme estimation de grandeur perturbatrice, afin de réduire une erreur de régulation produite par le couple de charge (31) appliqué, **caractérisé en ce que** le couple de charge instantané (31), appliqué à l'arbre d'entraînement du compresseur à air comprimé, du compresseur à air comprimé est estimé comme fonction d'au moins la grandeur suivante : une valeur instantanée d'un paramètre de pression (p), à partir de laquelle une valeur actuelle d'une pression d'air appliquée à la tubulure de sortie du compresseur à air comprimé peut être dérivée ou peut être estimée et/ou laquelle indique une mesure pour une contre-pression produite par un système à air comprimé accouplé au compresseur à air comprimé.

2. Procédé selon la revendication 1, **caractérisé en ce que** le couple de charge instantané (31), appliqué à l'arbre d'entraînement du compresseur à air comprimé, du compresseur à air comprimé est estimé comme fonction d'au moins l'une des grandeurs suivantes :

   (a) une position angulaire instantanée ($\delta$) de l'arbre d'entraînement du compresseur à air comprimé, et
   (b) une vitesse de rotation instantanée ($\omega$) de l'arbre d'entraînement du compresseur à air comprimé, qui est prédéfinie par une vitesse de rotation de moteur de l'entraînement électrique.

3. Procédé selon la revendication 2, **caractérisé en ce que** le couple de charge instantané (31), appliqué à l'arbre d'entraînement du compresseur à air comprimé, du compresseur à air comprimé est estimé au moins comme fonction de la position angulaire instantanée ($\delta$) de l'arbre d'entraînement, de la vitesse de rotation instantanée ($\omega$) de l'arbre d'entraînement et de la valeur instantanée du paramètre de pression (p).

4. Procédé selon l'une des revendications précédentes, **caractérisé en ce que** la fonction est enregistrée comme champ caractéristique (21).

5. Procédé selon l'une des revendications précédentes, **caractérisé**

   (a) **en ce qu'**un circuit de régulation (10) pour une régulation de courant électrique de l'entraînement électrique est soumis à l'estimation de grandeur perturbatrice ; et/ou
   (b) **en ce que** l'estimation de grandeur perturbatrice est inversée avec la fonction de transfert d'un circuit de régulation (10) pour une régulation de courant électrique de l'entraînement électrique et est ajoutée à une grandeur de commande (u) d'un régulateur de vitesse de rotation (3) de l'entraînement électrique et est donc appliquée au circuit de régulation (10) pour une régulation de courant électrique de l'entraînement électrique.

6. Procédé selon l'une des revendications précédentes, **caractérisé en ce que** le compresseur à air comprimé est réalisé sous forme de compresseur à air comprimé à piston alternatif, de compresseur à air comprimé à vis ou de compresseur à air comprimé à palettes.

7. Procédé selon l'une des revendications précédentes, **caractérisé en ce que** le couple de charge instantané (31), appliqué à l'arbre d'entraînement du compresseur, du compresseur est estimé comme fonction d'au moins l'une des grandeurs suivantes :

(a) un couple de friction du piston alternatif, le compresseur à air comprimé étant réalisé sous forme de compresseur à air comprimé à piston alternatif,
(b) une température ambiante de l'air et
(c) une température d'un réfrigérant d'un circuit de refroidissement du compresseur à air comprimé.

**8.** Procédé selon l'une des revendications précédentes, **caractérisé**

(a) **en ce qu'**un convertisseur de fréquence fonctionne pour la régulation de l'entraînement électrique avec une régulation vectorielle par champ orienté ; et/ou
(b) **en ce que** l'entraînement électrique comprend une machine électrique qui est réalisée sous forme de machine asynchrone, de machine synchrone, de machine à réluctance ou de machine à courant continu.

**9.** Circuit de régulation (20) pour la régulation d'un entraînement électrique d'un compresseur à air comprimé, entraîné de manière électrique, d'un véhicule automobile, **caractérisé en ce que** le circuit de régulation (20) est réalisé pour mettre en œuvre un procédé selon l'une des revendications 1 à 8.

**10.** Véhicule automobile, en particulier véhicule utilitaire comportant un compresseur à air comprimé entraîné de manière électrique pour l'alimentation d'un système pneumatique à air comprimé/de freinage dans un véhicule utilitaire, présentant un circuit de régulation (20) selon la revendication 9.

# FIG. 1

$\underline{1}$

$$\boxed{\mathsf{T_L} = T_R + T_{\ddot{O}} + T_{KW}} \qquad \boxed{T = G_T \cdot u}$$

$$\boxed{T_B = T - T_L = G_T \cdot u - T_R - T_{\ddot{O}} - T\_KW}$$

# FIG. 2

$$\Delta T = T_{KW} - \hat{T}_{KW} \qquad T = G_T \cdot u + \hat{T}_{KW}$$

$$T'_B = T - T_L = G_T \cdot u - T_R - T_{\ddot{O}} - \Delta T$$

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060125437 A1
- DE 102008006860 A1
- US 20110234144 A1